# EUROPÄISCHE PATENTANMELDUNG

(11) **EP 3 525 145 A1**
(43) Veröffentlichungstag der Anmeldung: **14.08.2019**
(21) Anmeldenummer: 19156897.1
(22) Anmeldetag: 13.02.2019
(51) Int. Cl.: G06Q 10/06, G06Q 50/12

(54) **VORRICHTUNG ZUM OPTIMIEREN EINES GASTRONOMISCHEN BETRIEBS**

(30) Priorität: 13.02.2018 DE 102018202185
(71) Anmelder: Divvoice UG, 52064 Aachen (DE)
(72) Erfinder: Schwarz, Alexander, 52064 Aachen (DE); Schwarz, Naomi, 52064 Aachen (DE)
(74) Vertreter: Daas, Manfred Martin

(57) **Zusammenfassung**

Die Erfindung betrifft eine Vorrichtung und ein Verfahren zur Übermittlung von Informationen beispielsweise eines Gastes eines Gastronomiebetriebes zur Optimierung des gastronomischen Betriebs. Insbesondere betrifft die Erfindung eine Vorrichtung zur Übermittlung von Informationen in Form einer Spracheingabe.

Die Erfindung betrifft eine gastronomische Vorrichtung (100) umfassend mindestens einen Einrichtungsgegenstand (140) mit einem darin ortsfest integrierten lokalen Modul (110) und mindestens eine zentrale Datenverarbeitungsanlage (130), wobei das lokale Modul (110) dazu ausgestaltet ist, elektronischen Daten zur zentralen Datenverarbeitungsanlage (130) zu übertragen, wobei das lokale Modul mindestens ein Mikrofon (111) und eine Sprachaufnahmestartvorrichtung (112) aufweist, die dazu geeignet sind, eine Audiodatei als die elektronischen Daten aus der Sprachaufnahme zu generieren, wobei in der zentralen Datenverarbeitungsanlage (130) eine Spracherkennungseinrichtung so ausgestaltet ist, dass sie die übertragenen elektronischen Daten auf enthaltende Sprache analysiert und eine darin enthaltende Information in einen Text überführt und an eine Basisstation (120) der gastronomischen Vorrichtung (100) sendet, damit eine in der Information enthaltenden Anforderung nach einem Gegenstand dort geeignet ausgegeben wird, um den Gegenstand zum Einrichtungsgegenstand mit dem ortsfesten lokalen Modul (110) transportieren zu können.

## Beschreibung

### Feld der Erfindung

Die Erfindung betrifft eine Vorrichtung und ein Verfahren zur Übermittlung von Informationen beispielsweise eines Gastes eines Gastronomiebetriebes zur Optimierung des gastronomischen Betriebs. Insbesondere betrifft die Erfindung eine Vorrichtung zur Übermittlung von Informationen in Form einer Spracheingabe.

### Stand der Technik

Der herkömmliche Ablauf der Betreuung von Gästen in Gastronomiebetrieben ist aufwendig, zeitintensiv und fehleranfällig. Zunächst muss beispielsweise eine Servicekraft zum Gast gehen, ihn zu einem Tisch führen und ihn über das Angebot informieren. Dies geschieht meist durch eine Speisekarte, Sonderwünsche werden mündlich vorgetragen; Rückfragen kosten zusätzlich Zeit. Muss der Gast zu lange warten, kann dies zu seiner Unzufriedenheit und sogar Verärgerung führen. Kann eine Frage des Gastes beispielsweise über die Realisierungsmöglichkeit eines Sonderwunsches von der Servicekraft nicht beantwortet werden, so muss diese Rücksprache halten, wobei sie sich üblicherweise vom Gast weg bewegen muss, und anschließend erneut den Gast aufsuchen, um ihn über das Ergebnis der Rücksprache zu informieren.

In modernen Gastronomiebetrieben ist das Servicepersonal bereits mit technischen Geräten ausgerüstet, über die eine Bestellung eingegeben und an einen zentralen Server weitergeleitet wird. Der zentrale Server kann die Bestellung in die Küche weitergeben, wo die Bestellung umgesetzt wird. Gleichzeitig kann die Bestellung in dem zentralen Server gespeichert werden, um beispielsweise für die Erstellung der Rechnung zur Verfügung zu stehen. Allerdings ist nach wie vor eine Servicekraft zur Aufnahme der Bestellung erforderlich. Insbesondere in Selfservice-Restaurants werden mobile Benachrichtigungssysteme benutzt, die den Gast anzeigen, wenn eine abgegebene Bestellung zum Abholen bereit ist. Auch in solchen Restaurants muss der Gast seine Bestellung bei einem Servicemitarbeiter aufgeben, wobei er sogar sich zu diesem Servicemitarbeiter hin begeben muss.

Aus der deutschen Offenlegungsschrift DE 102012105251 A1 ist ein Bestellsystem für Restaurants bekannt. Tischplätze eines Restaurants sind jeweils mit einem von einem Smartphone lesbaren Kennzeichnungsmittel versehen, so dass jeder Tischplatz anhand der eindeutigen Kennzeichnung identifizierbar ist. Die eindeutigen Kennzeichnungen werden mit dem zugeordneten Tischplatz und einer hierfür verfügbaren Angebotsliste in einer Datenbank auf einem zentralen, mit dem Internet verbundenen Server gespeichert werden. Der Gast liest die Kennzeichnung des Kennzeichnungsmittels mit einer geeigneten Applikation seines Smartphones ein, wobei anschließend die Applikation des Smartphones eine Internetverbindung mit dem Server aufbaut und die eingelesene Kennzeichnung als Information übermittelt. Der Server übermittelt der Applikation des Smartphones die für die Kennzeichnung verfügbare Angebotsliste und die Applikation zeigt die Angebotsliste auf dem Display des Smartphones als Auswahlmenü an. Der Kunde wählt die zu bestellenden Speisen und Getränke mit dem Smartphone aus und die Applikation des Smartphones übermittelt die Bestellung des Kunden an den Server. Der Server baut eine Internetverbindung mit einem Computer oder Smartphone des Anbieters auf und übermittelt die Bestellung des Gastes zusammen mit der Kennzeichnung des Tisches oder Tischplatzes. Der Anbieter liefert anschließend die bestellten Speisen und Getränke an den Tischplatz.

Nachteilig hierbei ist, dass der Gast für den Bestellvorgang sein eigenes mobiles Endgerät nutzen und eine individuelle Applikation des Gastronomiebetriebes installieren muss. Dies ist sehr zeitaufwändig sowie fehleranfällig. Die individuelle Applikation beansprucht darüber hinaus Speicherplatz auf dem mobilen Endgerät. Weiterhin muss der Gast die Lokalisation selbst durchführen, indem er die Kennzeichnung des Kennzeichnungsmittels mit seinem Smartphone einlesen muss. Es ist daher wünschenswert eine Vorrichtung zur Verfügung zu haben, welches ein Austausch von z.B. gastronomischen Informationen optimiert und die Nachteile des Stand der Technik überwindet. Unter gastronomiespezifischen Informationen werden dabei hier und im Folgenden alle Informationen verstanden, die in einem Gastronomiebetrieb insbesondere in der Kommunikation zwischen einem Gast und dem Gastronomiebetrieb anfallen. Dabei kann es sich beispielsweise um Bestellinformationen, Reservierungsinformationen, Serviceinformationen o.ä. handeln.

### Zusammenfassung

Es ist daher eine Aufgabe der vorliegenden Erfindung eine Vorrichtung und ein Verfahren zur Verfügung zu stellen, welches ein Austausch von Informationen, bzw. einen Bestellvorgang zwischen beispielsweise einem Gast und einem Wirt eines Gastronomiebetriebs optimiert und die Nachteile des Stand der Technik überwindet.

Erfindungsgemäß wird diese Aufgabe gelöst durch eine gastronomische Vorrichtung umfassend mindestens einen Einrichtungsgegenstand mit einem darin ortsfest integrierten lokalen Modul und mindestens eine zentrale Datenverarbeitungsanlage, wobei das lokale Modul dazu ausgestaltet ist, elektronischen Daten zur zentralen Datenverarbeitungsanlage zu übertragen, wobei das lokale Modul mindestens ein Mikrofon und eine Sprachaufnahmestartvorrichtung aufweist, die dazu geeignet sind, eine Audiodatei als die elektronischen Daten aus der Sprachaufnahme zu generieren, wobei in der zentralen Datenverarbeitungsanlage eine Spracherkennungseinrichtung so ausgestaltet ist, dass sie die übertragenen elektronischen Daten auf enthaltende Sprache analysiert und eine darin enthaltende Information in einen Text überführt und an eine Basisstation der gastronomischen Vorrichtung sendet, damit eine in der Information enthaltenden Anforderung nach einem Gegenstand dort geeignet ausgegeben wird, um den Gegenstand zum Einrichtungsgegenstand mit dem ortsfesten lokalen Modul transportieren zu können.

Unter dem Begriff gastronomische Vorrichtung wird eine technische Vorrichtung in einem Betrieb, vorzugsweise Gastronomiebetrieb, verstanden, in dem eine erste Person, beispielsweise ein Gast, eine Information an eine zentrale Stelle, beispielsweise eine Bestellung oder einen anderen Wunsch an eine Servicestelle, übermittelt. Damit kann der Gastronomiebetrieb beispielsweise ein Restaurant, eine Bar, ein Hotel oder auch ein Krankenhaus oder ein Altenheim oder Seniorenresidenz sein.

Auch ist der Einsatz in einer Büroumgebung denkbar. Ein Einrichtungsgegenstand kann ein Möbelstück, wie z.B.: ein Tisch, eine Tischgruppe, eine Bank, eine Lampe etc. beinhalten. Hierbei handelt es sich um eine oder mehrere physikalische Gegenstände, die herkömmlich in einem Betrieb vorkommen.

Das lokale Modul ist ortsfest mit dem Einrichtungsgegenstand verbunden. Ortsfest bedeutet, dass beispielsweise über eine mechanische Fixierung eine eindeutige übergeordnete Zuordnung zu einem Einrichtungsgegenstand besteht. Das schließt nicht aus, dass das lokale Modul drahtlos sein kann, solange die Zuordnung vorhanden ist. Das lokale Modul kann elektronische Daten an die zentrale Datenverarbeitungsanlage über ein Netzwerk senden. Unter Netzwerk wird dabei hier und im Folgenden jede Art eines Netzwerks, beispielsweise ein WLAN-Netz oder auch das Internet. Ein erfolgreicher Verbindungsaufbau kann auf dem lokalen Modul signalisiert werden. Beispielsweise kann eine Visualisierung auf dem lokalen Modul erfolgen. Beispielsweise können Informationen über die lokalen Module wie z.B. Verbindungsstatus zur Basisstation, Akkuzustand, Verbundene Gäste mit dem Tischmodul, getätigte Bestellungen oder vorgemerkte Reservierungen an der Basisstation eingesehen werden. Beispielsweise kann ein Bestellvorgang durch einen Gast über das lokale Modul eingegeben werden, anschließend über die drahtlose Datenverbindung, wie beispielsweise WLAN, Bluetooth, Funk oder NFC (Near Field Communication) an die zentrale Datenverarbeitungsanlage oder an die Basisstation weitergegeben werden. Beispielsweise kann die Verbindung über eine physikalische Datenkommunikationseinrichtung herstellt werden. Die von dem lokalen Modul aufgenommene Information kann in Form einer Audiodatei von der an die zentrale Datenverarbeitungsanlage gesendet werden. Auch kann die Information vorher an die Basisstation gesendet werden, um dann an die zentrale Datenverarbeitungsanalage weitergeleitet zu werden.

In der zentralen Datenverarbeitungsanlage, die beispielsweise ein Rechner, ein Server oder eine Cloud sein kann, kann die Bestellinformation beispielsweise für statistische Zwecke analysiert und weiterverarbeitet werden. Anschließend kann die Bestellinformation von der zentralen Datenverarbeitungsanlage an die Basisstation gesendet werden, wo sie zur Umsetzung angezeigt wird. In der Basisstation kann die Bestellinformation beispielsweise für statistische Zwecke analysiert und weiterverarbeitet werden. Eine Information, beispielsweise eine Bestellinformation, kann von dem Gast beispielsweise mittels Sprache über das Mikrofon eingegeben werden. Damit wird die Eingabe intuitiv und für den Gast sehr einfach. Über die Ausgabeeinrichtung des lokalen Moduls kann eine Information an den Gast gegeben werden. Beispielsweise kann eine Bestellbestätigung erfolgen. Sollte ein eingegebener Gästewunsch nicht erfüllbar sein, kann dies dem Gast mitgeteilt werden und beispielswiese eine Alternative für den nicht erfüllbaren Wunsch angeboten werden. Eine abhörbare Kopie (Audiodatei) der über Sprache in das lokale Modul eingegebenen Information kann in der Basisstation gespeichert werden. Die Sprachaufnahmestartvorrichtung kann beispielsweise ein Taster sein, der gedrückt gehalten werden muss, um die Sprachaufnahme zu starten und aktiv zu halten. Der Aktivitätsstatus der Sprachaufnahme kann dem Nutzer durch die Visualisierungsvorrichtung angezeigt werden. Durch die Verwendung einer solchen Sprachaufnahmestartvorrichtung insbesondere in Verbindung mit der Visualisierungsvorrichtung kann der Nutzer erkennen, ob eine Sprachaufnahme aktiv ist und insbesondere auch, wann sie nicht aktiv ist und beispielsweise seine Gespräche nicht aufgenommen werden. Eine Alternative für den Taster als Sprachaufnahmestartvorrichtung stellt beispielsweise ein zeitgesteuertes Relais dar, das mit der Betätigung der Sprachaufnahmestartvorrichtung aktiviert wird und nach einer voreingestellten Zeit die Sprachaufnahme stoppt. Die Sprachaufnahmestartvorrichtung kann eine physische Verbindung zwischen dem mindestens einen Mikrofon und einer Sprachaufnahmeeinrichtung herstellen. Die Sprachaufnahme an sich bietet weiter den Vorteil bei z.B. Unstimmigkeiten während der Bezahlung als Nachweis zu dienen, ob der Gast die Bestellung getätigt hat oder nicht.

In einer Ausführungsform ist das lokale Modul dazu eingerichtet, über ein Netzwerk eine drahtlose Datenverbindung mit der Basisstation und/oder der zentralen Datenverarbeitungsanlage aufzubauen, während die Basisstation dazu eingerichtet ist, eine Datenverbindung zumindest mit der zentralen Datenverarbeitungsanlage aufzubauen.

Wie oben beschrieben kann die zentrale Datenverarbeitungsanlage eine Cloud sein, die dazu geeignet ist Bestellinformationen für statische Zwecke zu analysieren und weiterzuverarbeiten. In einer anderen Ausführungsform ist die Basisstation eine Cloud. In dieser Ausführungsform besitzt jedes Modul eine Datenverbindung zur Cloud. Alternativ ist die Leistung des Moduls dazu geeignet eine Analyse der Eingabe zu betreiben. In einer anderen Ausführungsform ist die Basisstation ein Smartphone, Tablet oder Notebook. Außerdem ist es möglich, dass die Basisstation gleich der zentralen Datenverarbeitungsanlage ist oder vice versa. Das hat den Vorteil Ressourcen zu sparen.

Über die örtliche Integration in ein Einrichtungsgegenstand ist die Lokalisierung des lokalen Moduls sehr einfach möglich und eine über das lokale Modul übermittelte Information unmittelbar einem Ort, beispielsweise einem Tisch in einem Gastronomiebetrieb, zuordenbar. Das lokale Modul kann eine Anzeigeeinrichtung, beispielsweise eine Anzeigeeinrichtung mit LEDs, aufweisen. Zur Energieversorgung kann das lokale Modul eine wiederaufladbare Batterie, insbesondere in Form eines austauschbaren Akkupacks, der in einer Aufnahme des lokalen Moduls gehaltert sein kann, aufweisen. Dabei kann die Aufnahme so ausgestaltet sein, dass der Akkupack nicht ohne technische Hilfsmittel entnehmbar ist. Darüber hinaus ist es denkbar, dass der Ladezustand des Akkupacks von dem lokalen Modul ständig überwacht wird und ständig oder nur bei Erreichen einer zuvor definierten Schwelle das lokale Modul den Ladezustand an die Basisstation übermittelt. Alternativ oder zusätzlich kann auch eine interne, d.h. nicht austauschbare Batterie, die auch als wiederaufladbarer Akkumulator ausgeführt sein kann, verbaut sein. Für ortsfeste lokale Module ist auch eine kabelgebundene Energieversorgung denkbar. Dabei kann bei kabelgebundener Energieversorgung ein Netzteil erforderlich sein, wobei das Netzteil alternativ zu dem Akkupack in dieselbe Aufnahme einbaubar gestaltet sein kann. Weiterhin kann das lokale Modul einen Lautsprecher aufweisen.

Das lokale Modul weist vorteilhafterweise ein robustes und zumindest spritzwassergeschütztes Gehäuse auf. In Gastronomiebetrieben kann es durch Getränke oder Reinigungsflüssigkeiten zu Spritzwasserbelastungen kommen. Bei einem Einsatz in der Außengastronomie können zudem Witterungseinflüsse auftreten, vor denen das Modul so geschützt ist. Damit ist die Einhaltung beispielsweise der Schutzartklasse IP 54 nach DIN EN 60 529 durch das Gehäuse vorteilhaft.

In einer weiteren vorteilhaften Ausführungsform ist das lokale Modul ein drahtloses (systemeigenes) Modul. Das drahtlose Modul hat den Vorteil, dass der Gast diese leicht in eine für ihn bezüglich Informationsein- oder ausgabe angenehme Position zu bringen ist. Weiterhin hat die Positionierung den Vorteil, dass es mögliche physikalische Behinderungen, wie z.B. Stolpergefahr für den Gast oder das Personal reduziert.

Das lokale Modul kann eine automatische Helligkeitsanpassung aufweisen. Abhängig von der Tageszeit sind die Lichtverhältnisse in oder außerhalb eines Lokals sehr unterschiedlich. Dies stellt für die eingebaute Beleuchtung oder das Display in dem lokalen Modul ein Problem dar. Bei sehr heller Umgebung besteht die Gefahr, dass der Gast ein optisches Signal nicht wahrnimmt. Umgekehrt besteht die Gefahr, dass bei niedriger Umgebungsbeleuchtung ein optisches Signal des lokalen Moduls als zu hell und unangenehm empfunden wird. Zur Vermeidung dieser Nachteile kann das lokale Modul einen Helligkeitssensor aufweisen. Dieser misst die Stärke der Umgebungsbeleuchtung und passt die Helligkeit der internen Beleuchtung des lokalen Moduls automatisch an. Weiterhin kann das lokale Modul auch eine automatische Lautstärkeanpassung aufweisen. In einem Gastronomiebetrieb kann die Lautstärke beispielsweise abhängig von der Besucheranzahl und -art sowohl zeitlich als auch örtlich stark schwanken. Es ist durchaus möglich, dass in einem Bereich eines Gastronomiebetriebs eine sehr laute Gruppe von Gästen weilt, während in einem anderen Bereich nur wenige und sehr leise Gäste weilen. Wird der lokal herrschende Geräuschpegel nicht beachtet, können Kommunikationsprobleme bei dem lokalen Modul entstehen. Es ist durchaus denkbar, dass ein Gast durch eine laute Umgebung die Antworten eines lokalen Moduls nicht versteht oder durch eine leise Umgebung eine Antwort des lokalen Moduls als unangenehm laut empfunden wird. Durch die kontinuierliche Analyse der Geräusche in der näheren Umgebung eines lokalen Moduls in dem jeweiligen Modul kann eine zweidimensionale Geräuschmap erstellt werden, die der automatischen Lautstärkenregelung der Lautsprecher in dem lokalen Modul als Grundlage dienen kann. Erhält ein lokales Modul vor jeder Audioausgabe die Audiodatei zum Abspielen und Informationen zur Lautstärke der Umgebung, kann die Lautstärke der Wiedergabe der Audiodatei entsprechend angepasst werden. Die kontinuierliche Analyse der Umgebungsgeräusche kann beispielsweise durch einen zusätzlich zum Mikrofon eingebauten Audiosensor erfolgen, der kontinuierlich oder diskontinuierlich die Umgebungslautstärke misst. Zusätzlich oder alternativ können Umgebungsgeräusche auch mit dem eingebauten Mikrofon aufgenommen werden. Sobald die Sprachaufnahmestartvorrichtung aktiviert wird, nimmt das Miere auch die Umgebungsgeräusche auf. Die Informationen zur Umgebungslautstärke können in dem lokalen Modul analysiert werden oder zur Basisstationen gesendet werden, um dort analysiert zu werden. Entsprechend können die Signale zur Lautstärkeanpassung unmittelbar in dem lokalen Modul oder in der Basisstation erzeugt und an das lokale Modul übermittelt werden. In dieser Ausführungsform kann demnach das lokale Modul zusätzlich zum Mikrofon einen eingebauten Audiosensor aufweisen, der kontinuierlich oder diskontinuierlich eine Umgebungslautstärke messen kann, damit das lokale Modul durch eine Analyse der Umgebungslautstärke eine zweidimensionale Geräuschmap erstellen kann, die als Grundlage einer automatischen Lautstärkenregelung der Lautsprecher in dem lokalen Modul dient.

In einer weiteren vorteilhaften Ausführungsform ist in der Vorrichtung eine Diebstahlwarneinrichtung integriert, die dazu eingerichtet ist, eine Entfernung des lokalen Moduls aus einem zuvor festgelegten Raum anzuzeigen. Es besteht die Befürchtung, dass insbesondere mobile lokale Module von Dritten entwendet werden können. Wird das mobile lokale Modul beispielsweise ständig über die drahtlose Verbindung zur Basisstation lokalisiert, kann unmittelbar festgestellt werden, wenn das mobile lokale Modul einen zuvor festgelegten Bereich um die Basisstation verlässt und Gegenmaßnahmen können unmittelbar eingeleitet werden. Die Lokalisierung kann beispielsweise durch die kontinuierliche Messung der Signalstärke des von den Sendern im drahtlosen Netz zur drahtlosen Verbindung aufgebauten elektromagnetischen Feld erfolgen. Beispielsweise kann die drahtlose Verbindung über ein wireless local area network (WLAN) erfolgen. Dabei kann ein Zugangspunkt (access point) oder mehrere, im Raum verteilte access points vorgesehen werden. Die mobilen lokalen Module können sich an diesen access points einloggen, wobei die jeweilige Signalstärke der sendenden lokalen Module messbar ist. Die Signalstärke nimmt mit der Entfernung des sendenden lokalen Moduls von einem access point ab. Sind die einzelnen lokalen Module bekannt, kann sehr schnell festgestellt werden, wenn die Signalstärke eines lokalen Moduls unter eine zuvor festgelegte Schwelle sinkt.

Eine weitere Möglichkeit der Lokalisierung von mobilen lokalen Modulen besteht in der Messung der Signallaufzeit der gesendeten Signale zwischen einem mobilen lokalen Modul zu dem oder den access points beziehungsweise umgekehrt. Zu diesem Zweck können auch Testsignale gesegnet werden. Die Signallaufzeit nimmt mit der Entfernung des Senders zum Empfänger zu.

In einer weiteren Ausführungsform kann das Modul geeignet sein als eine Kartenhalterung. Dafür kann auf der Oberfläche des lokalen Moduls ein Schlitz integriert werden, der dazu geeignet ist einfache, flache Karten zu halten. Je nach Restaurant sind Speisekarten in Papierform begehrt. Der Gast kann die Speisekarten entnehmen und anschließend direkt am Tisch bestellen. Diese Ausführungsform hat den Vorteil Platz auf dem Tisch zu sparen.

In einer vorteilhaften Ausführungsform ermöglicht das lokale Modul die Eingabe einer Information über eine Lokalisierung an einem diskreten Ort, wobei die Information über die Lokalisierung über eine an dem diskreten Ort eingerichtete Bestätigungsvorrichtung bestätigbar ist. Der diskrete Ort kann beispielsweise ein bestimmter Tisch (oder anderes Möbelstück, bzw. Gast/Gastgruppe) in einem Gastronomiebetrieb sein. Dazu kann dieser Tisch beispielsweise mit einer Tischnummer versehen sein. Die zur Bestätigung vorgesehene Vorrichtung kann beispielsweise ein Taster an dem Tisch sein, der ebenfalls mit der Basisstation wirkverbunden ist. Diese Verbindung kann drahtgebunden oder drahtlos ausgeführt sein. Durch die Bestätigung ist sichergestellt, dass der Gast die Lokalisierung des diskreten Ortes fehlerfrei durchgeführt hat.

In einer vorteilhaften alternativen Ausführungsform ist das lokale Modul dazu eingerichtet, seine Lokalisierungsinformation automatisch zu erzeugen und an die Basisstation zu übermitteln. Die Lokalisierungsinformation kann dabei wie oben bereits beschrieben beispielsweise über eine Signalstärkemessung oder über eine Signallaufzeitmessung erzeugt werden. Durch entsprechende parallele Messungen zu mindestens zwei Bezugspunkten kann der Ort eines Senders genau bestimmt werden. Somit ist es möglich, den Ort eines lokalen Moduls innerhalb eines zugelassenen Bereichs genau zu bestimmen, sofern das lokale Modul mit mindestens zwei access points verbunden ist. Durch einen Abgleich dieser Lokalisierungsinformation mit einer zuvor erhobenen Information über die Aufstellorte der Möbelstücke, beispielsweise der Tische in einem Gastraum, lässt sich die Zuordnung eines lokalen Moduls zu einem Einrichtungsgegenstand, bzw. Möbelstück eindeutig bestimmen. Der Abgleich und die Zuordnung können dabei beispielsweise in der Basisstation erfolgen.

Über die Lokalisierungsinformation kann auch ein Zugang zum Netzwerk, insbesondere auch zum Internet, gesteuert werden. So ist es auch denkbar, dass sich beispielsweise ein Gast für eine Tischreservierung mit persönlichen Daten registriert und über die Verknüpfung dieser Daten mit den Lokalisierungsdaten sowie einem Zeitstempel einen personalisierter Netzwerkzugang einzurichten. Die Steuerung kann dabei über die Basisstation erfolgen. Die Internetverbindung kann auch automatisch geschlossen werden, sobald die Basisstation die Information erhält, dass der Gast seinen Aufenthalt in dem Gastronomiebetrieb in naher Zukunft beenden wird oder bereits beendet hat. Beispielsweise kann die Information über einen Bezahlvorgang dazu genutzt werden, die entsprechende Internetverbindung zu trennen.

Es hat sich als vorteilhaft erwiesen, wenn das lokale Modul dazu eingerichtet ist, die drahtlose Datenverbindung mit der Basisstation und/oder der zentralen Datenverarbeitungsanlage mittels WLAN, Bluetooth oder NFC (Near Field Communication) aufzubauen.

In einer vorteilhaften Ausführungsform ist das lokale Modul dazu eingerichtet, eine Reservierungsinformation einer Dienstleistung anzuzeigen. Die Reservierungsinformation kann beispielsweise die Information über eine gastronomiespezifische Dienstleistung wie beispielsweise einer Tischreservierung sein. Dabei kann dem Gast angezeigt werden, ob ein bestimmter Tisch zu einer bestimmten Zeit reserviert ist.

Durch die Integration der erfindungsgemäßen Vorrichtung und der Anbindung dieser an das Kassensystem ist es möglich an die Information zu kommen, welche Tische des Gastronomiebetriebs aktuell belegt sind und wie lange diese schon belegt sind. Aus statistischen Daten lässt sich hochrechnen, wie lange jeder Tisch ungefähr noch belegt sein wird. Dadurch kann eine Tischreservierungsfunktion realisiert werden. Reservierte Tische können durch beispielsweise ein optisches Signal gekennzeichnet werden. Ein Nutzer kann beispielsweise nach erfolgreicher Reservierung die Tischkennung des reservierten Tisches erhalten. Dabei kann es sich um eine Tischnummer oder auch ein optisches Signal handeln, mit der der reservierte Tisch von dem lokalen Modul markiert ist. Diese Information kann dem Gast beispielsweise über einen Messengerdienst wie beispielsweise WhatsApp oder eine Kurzmitteilung, beispielsweise eine SMS, von der Vorrichtung übermittelt werden. Die Vorrichtung kann dabei Tische optimal hinsichtlich Belegungszeit und Personenanzahl belegen. Eine Tischreservierung kann entweder durch einen Nutzer oder einen Betreiber durchgeführt werden. Ein Nutzer kann entweder über eine Webseite, eine Applikation (App) oder mittels einer Nachricht, beispielsweise als WhatsApp, SMS oder Mail eine Reservierungsanfrage tätigen. Falls eine Reservierung zum Wunschtermin nicht möglich ist, kann die Vorrichtung dem Nutzer beispielsweise eine alternative Uhrzeit vorgeschlagen. Dadurch muss die Tischbelegung nicht offengelegt werden und der Gast wird nicht dadurch abgeschreckt, dass kein Tisch mehr zu seiner gewünschten Zeit frei ist. Der Nutzer kann entweder über die Webseite oder App die aktuelle oder zukünftige Tischbelegung einsehen und sich seinen bevorzugten Tisch zu einer bestimmten Zeit reservieren. Auch der Betreiber kann mittels der Basisstation ebenfalls einen Tisch reservieren, falls ein Nutzer lieber telefonisch einen Tisch reservieren möchte. Das lokale Modul kann auch selbständig eine Reservierung entfernen, falls ein Gast eine Reservierung im System storniert. Ebenfalls kann das lokale Modul selbständig eine Reservierung entfernen, wenn der Gast nach einer gewissen Zeit nach der reservierten Zeit nicht erschienen ist. Der Gast kann zusätzlich zur Reservierung auch seine Bestellung vorab in die Vorrichtung eingeben, wodurch Wartezeit für den Gast reduziert werden kann. Die Vorrichtung bietet auch Gewohnheitsgästen, die nicht immer ihren gewohnten Tisch zur gewohnten Zeit bekommen, eine Lösung, indem diese vorher schon den Tisch durch eine Dauerreservierung oder eine gezielte Personengewohnheitsanalyse geblockt halten.

Es hat sich weiterhin als vorteilhaft erwiesen, wenn die Basisstation ein Anzeigemodul und einen Lautsprecher aufweist und zur Steuerung der Vorrichtung eingerichtet ist. Über das Anzeigemodul können die vom Gast eingegebenen Informationen angezeigt werden. Weiterhin kann die Information auch in Sprache umgewandelt und über den Lautsprecher ausgegeben werden, wobei die Information nicht in Sprache umgewandelt werden muss, wenn der Gast sie bereits in Sprachform eingegeben hat. Zu der Steuerung kann beispielsweise gehören, Reservierungsinformation zu aktualisieren und den Zugang von einem bestimmten Smartphone zu beenden, nachdem ein Bezahlvorgang stattgefunden hat.

In einer weiteren vorteilhaften Ausführungsform weist die Basisstation eine Spracherkennungseinrichtung auf, wobei die Spracherkennungseinrichtung dazu eingerichtet ist, die in der von dem lokalen Modul empfangene enthaltenden Sprachdatei enthaltende Sprache zu analysieren, Fremdsprachen zu erkennen und in eine Zielsprache zu übersetzen und die in der Sprachdatei enthaltene Information in Text zu überführen und anzuzeigen, sofern die über Sprache eingegebene Information in Text überführbar ist und anderenfalls die Sprachdatei wiederzugeben. Beispielsweise kann es vorkommen, dass die Spracheingabe für die Spracherkennungseinrichtung zu undeutlich gesprochen ist, sodass eine Spracherkennung nicht möglich ist. In diesem Fall kann die Sprachdatei unbearbeitet wiedergegeben werden, Kann auch ein Servicemitarbeiter die Information nicht aus der übermittelten Rede herausfiltern, kann bei dem Gast nachgefragt werden.

In einer weiteren Ausführungsform weist die zentrale Datenverarbeitungsanlage eine solche Spracherkennungseinrichtung auf. Der Vorteil hiervon ist, dass die Leistungsfähigkeit der Basisstation verringert werden kann, da die Spracherkennungseinrichtung üblicherweise eine erhöhte Leistungsfähigkeit der Vorrichtung, auf dem sie installiert ist, voraussetzt. Dieser Vorteil wird insbesondere dann größer, wenn ein Betreiber mehrere Gastronomiebetriebe an unterschiedlichen Orten betreibt, so dass die Anschaffung mehrerer leistungsfähiger Basisstationen vermieden werden kann.

In einer weiteren vorteilhaften Ausführungsform ist auf der Basisstation ein Reservierungssystem installiert, wobei in dem Reservierungssystem die Reservierung einer Servicedienstleistung wie beispielsweise eine Tischreservierung speicherbar ist und wobei ein Reservierungswunsch über ein Netzwerk an das Reservierungssystem Obermittelbar ist, wobei in dem Reservierungssystem der Reservierungswunsch hinsichtlich seiner Ausführbarkeit überprüfbar ist und von dem Reservierungssystem bei Ausführbarkeit des Reservierungswunsches eine Reservierungsbestätigung oder bei Nichtausführbarkeit des Reservierungswunsches eine Reservierungsablehnung erzeugbar und über das Netzwerk an den Reservierungsabsender versendbar ist, wobei die Information für eine Reservierung für eine Servicedienstleistung von der Basisstation an das lokale Modul sendbar ist.

Die Vorrichtung kann auch optionale Zusatzfunktionen abbilden. Mit den vorliegenden Informationen können beispielsweise statistische Auswertungen und Analysen vorgenommen werden. Weiterhin können an dem lokalen Modul weitere Informationen beispielsweise über das Wetterabrufbar sein und weitere Wünsche wie beispielsweise die Bestellung eines Taxis können übermittelt werden. Weiterhin kann beispielsweise eine Servicekraft zum Tisch gebeten werden und Bezahlvorgänge durchgeführt werden.

Es ist auch möglich, in die Vorrichtung zusätzliche Funktionen zu implementieren. Solche zusätzlichen Funktionen können beispielsweise sein der Erwerb und die Verwaltung von Treuepunkten sein, die Vorbestellung von Dienstleistungen betreffen, die Anzeige von Auflistungen angebotener Leistungen wie beispielsweise digitale Speise- und Getränkekarten inklusiv Zusatzinformation wie Beispielsweise die Angabe von Inhaltsstoffen, die Rechnungszusammenstellung, Aufteilung und Begleichung über ein digitales Bezahlsystem sein. Weiterhin kann eine Feedbackfunktion realisiert sein, über die ein Gast Feedback an den Betreiber des Gastronomiebetriebs richten kann. Darüber hinaus ist eine Informationsbereitstellung über Sonderaktionen, insbesondere auch zeitlich begrenzte Sonderaktionen oder dynamische möglich. Weiterhin ist es auch denkbar, dass ein Gast bereits aufgegebene Bestellungen seines Tisches einsehen kann.

Die Aufgabe wird ferner gelöst durch ein Verfahren zum Betreiben einer erfindungsmäßen gastronomischen Vorrichtung, wobei die gastronomische Vorrichtung mindestens einen Einrichtungsgegenstand mit einem darin ortsfest integrierten lokalen Modul und mindestens einer zentralen Datenverarbeitungsanlage umfasst, wobei das lokale Modul mindestens ein Mikrofon und eine Sprachaufnahmestartvorrichtung aufweist, umfassend:
- Generieren einer Audiodatei als elektronische Daten aus einer Sprachaufnahme durch das Mikrofon des lokalen Moduls;
- Übertragen von elektronischen Daten vom lokalen Modul zur zentralen Datenverarbeitungsanlage;
- Analysieren der übertragenen elektronischen Daten auf enthaltende Sprache durch eine Spracherkennungseinrichtung und ein Überführen einer darin enthaltende Information in einem Text;
- Senden des Textes an eine Basisstation der gastronomischen Vorrichtung (100); und
- Transportieren eines in d er Information angeforderten Gegenstandes zur Einrichtungsgegenstand mit dem ortsfesten lokalen Modul.

Zu beachten hierbei ist, dass das Verfahren in allen gelehrten Ausführungsformen der erfindungsgemäßen Vorrichtung ausgeführt werden kann.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildungen.

### Kurze Beschreibung der Abbildungen:

- Fig. 1: Schematische Darstellung einer erfindungsgemäßen Vorrichtung in einer ersten Ausführung
- Fig. 2: Schematische Darstellung einer erfindungsgemäßen Vorrichtung in einer zweiten Ausführung
- Fig. 3 a): Draufsicht einer schematischen Darstellung eines lokalen Moduls innerhalb eine erfindungsgemäßen Vorrichtung;

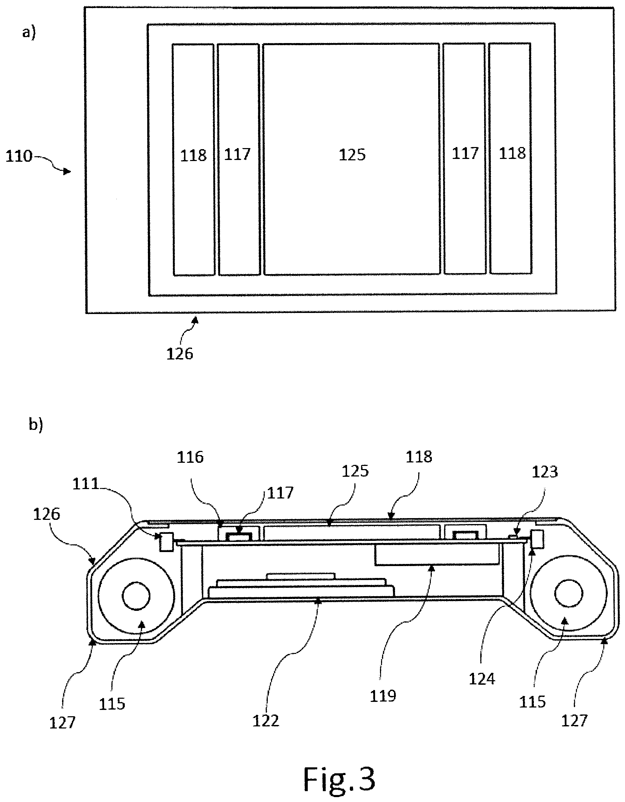

- Fig. 3 b): Seitenansicht einer schematischen Darstellung eines lokalen Moduls innerhalb einer erfindungsgemäßen Vorrichtung

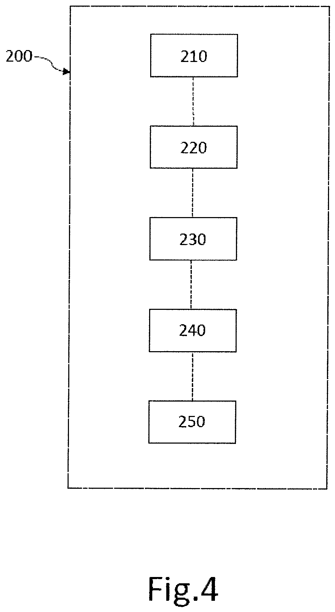

- Fig. 4: Verfahren zum Betreiben der erfindungsgemäßen Vorrichtung

### Detaillierte Beschreibung der Abbildungen:

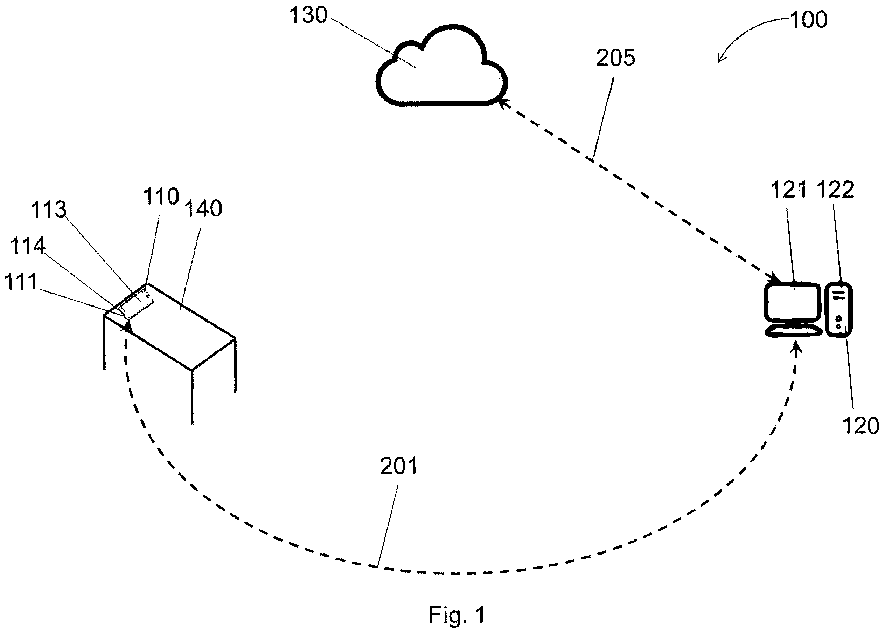

Fig. 1 zeigt eine Schematische Darstellung einer erfindungsgemäßen Vorrichtung 100 in einer ersten Ausführungsform. Die Vorrichtung 100 weist eine Basisstation 120 auf. Weiterhin weist die Vorrichtung 100 lokale Module 110, die mit jeweils einem Einrichtungsgegenstand 140 in Form eines Restauranttisches verbunden sind. In der Figur 1 ist zur besseren Übersichtlichkeit nur ein lokales Modul 110 und ein Einrichtungsgegenstand 140 gezeichnet. Weiterhin weist die Vorrichtung 100 eine zentrale Datenverarbeitungsanlage 130 in Form einer Cloud auf. Zwischen dem lokalen Modul 110 und der Basisstation 120 besteht eine drahtlose Datenverbindung 201 über ein WLAN. Zwischen der Basisstation 120 und der zentralen Datenverarbeitungsanlage 130 besteht ebenfalls eine Datenverbindung, wobei diese zumindest teilweise drahtlos sein kann. Die Datenverbindung zwischen der Basisstation 120 und der zentralen Datenverarbeitungsanlage 130 kann aber auch komplett drahtgebunden sein. Das lokale Modul kann außerdem dazu ausgestaltet sein elektronische Daten zur zentralen Datenverarbeitungsanlage 130 zu übertragen (nicht explizit gezeichnet). Das lokale Modul 110 weist mindestens ein Mikrofon 111, eine Sprachaufnahmestartvorrichtung 112 (nicht gezeichnet), eine Visualisierungsvorrichtung 113 für die Sprachaufnahme und eine Ausgabeeinrichtung 114 für Sprache in Form eines Lautsprechers auf. Ein Gast kann einen Bestellvorgang über das lokale Modul 110 eingegeben werden, indem der Gast die Sprachaufnahmestartvorrichtung 112 betätigt und seine Bestellung in das Mikrofon 111 des lokalen Moduls 110 spricht. Dabei kann die Sprachaufnahmestartvorrichtung 112 so ausgestaltet sein, dass sie während der gesamten Sprachaufnahme betätigt sein muss. In einer anderen Ausführungsform muss die Sprachaufnahmestartvorrichtung 112 nur einmal kurz betätigt werden, um entweder nach einer zuvor definierten Zeit die Sprachaufnahme zu stoppen oder um die Sprachaufnahme so lange aktiv zu lassen, bis der Gast die Sprachaufnahmestartvorrichtung 112 zum Beenden erneut betätigt. Durch die bewusste Betätigung der Sprachaufnahmestartvorrichtung 112 weiß der Gast, dass seine verbale Äußerung nun aufgenommen wird und er nach Beendigung der Sprachaufnahme keine Befürchtung mehr haben muss, dass verbale Äußerungen im Umkreis des Mikrofons weiter aufgenommen werden. Die Sprachaufnahme wird vom lokalen Modul 110 über die drahtlose Datenverbindung 201 an die Basisstation 120 weitergeleitet, von wo die Sprachaufnahme an die zentrale Datenverarbeitungsanlage 130 über die Datenverbindung 205 gesendet wird. In der zentralen Datenverarbeitungsanlage 130, die in dem dargestellten Ausführungsbeispiel als Cloud ausgeführt ist, findet in einer Spracherkennungseinrichtung eine Spracherkennung statt, wobei die in der Sprachdatei enthaltende Sprache analysiert wird und Fremdsprachen erkannt werden und in eine Zielsprache zu übersetzt werden und die in der Sprachdatei enthaltene Information in Text überführt und an die Basisstation 120 zurück gesendet wird, sofern die über Sprache eingegebene Information in Text überführbar ist. Anderenfalls wird die Sprachdatei an die Basisstation 120 in unveränderter Form gesendet. Die in der Information enthaltende Anforderung nach einem Gegenstand wird dann an einem geeigneten Ort ausgegeben, um den Gegenstand zum Einrichtungsgenstand (Restauranttisch) mit dem lokalen Modul transportieren zu können. Unter Cloud wird dabei die Bereitstellung von IT-Infrastruktur wie beispielsweise Speicherplatz, Rechenleistung oder Anwendungssoftware als Dienstleistung über das Internet verstanden.

Konnte der Text der Sprachdatei in der zentralen Datenverarbeitungsanlage 130 umgewandelt werden, wird dieser Text über die Datenverbindung 205 an die Basisstation 120 gesendet, wo er zur Umsetzung auf einem Anzeigemodul 121 angezeigt wird. Konnte die Sprachdatei nicht in Text umgesetzt werden, kann die zentrale Datenverarbeitungsanlage 130 die Sprachdatei über die Datenverbindung 205 an die Basisstation 120 senden, wo er zur Umsetzung über Lautsprecher 122 ausgegeben wird. Die Sprachdatei (oder Audiodatei) muss nicht automatisch versendet werden. Als Folge sieht der Wirt bzw. Kellner auf seiner Seite, dass eine gewisse Bestelleinheit (Tisch, Gastgruppe etc.) eine Bestellung getätigt hat. Falls die Bestellung nicht direkt angezeigt wird, kann er nur die Sprachdatei abspielen. Durch dessen Inhalt kann er die Bestellung falls notwendig manuell eingeben oder den Bestellenden direkt fragen. Diese Vorrichtung und das entsprechende Verfahren (sowie das dazu entstehende System) hat den Vorteil, dass eine hohe Reproduzierbarkeit der Bestellung und damit eine hohe Zuverlässigkeit gewährleistet werden.

Das lokale Modul 110 verfügt ebenfalls über eine Ausgabeeinrichtung 114 in Form eines Lautsprechers, worüber eine Information an den Gast gegeben werden kann. Kann beispielsweise auch ein Servicemitarbeiter die Information nicht aus der übermittelten Sprachdatei herausfiltern, kann bei dem Gast beispielsweise über die Ausgabeeinrichtung 114 des lokalen Moduls 110 nachgefragt werden. Weiterhin kann auch eine Bestellbestätigung über die Ausgabeeinrichtung 114 des lokalen Moduls 110 erfolgen. Sollte ein eingegebener Gästewunsch nicht erfüllbar sein, kann dies dem Gast ebenfalls über die Ausgabeeinrichtung 114 des lokalen Moduls 110 mitgeteilt werden und beispielswiese eine Alternative für den nicht erfüllbaren Wunsch angeboten werden.

Dadurch, dass das lokale Modul 110 als ortsfest integriert mit dem Möbelstück 140 verbunden ist, ist die Lokalisierung des lokalen Moduls 110 sehr einfach möglich und eine über das lokale Modul 110 übermittelte Information kann unmittelbar einem Ort, beispielsweise einem Tisch (oder mehrere kleine Tische, die eine Tischeinheit bilden) in einem Gastronomiebetrieb als Möbelstück 140 zugeordnet werden.

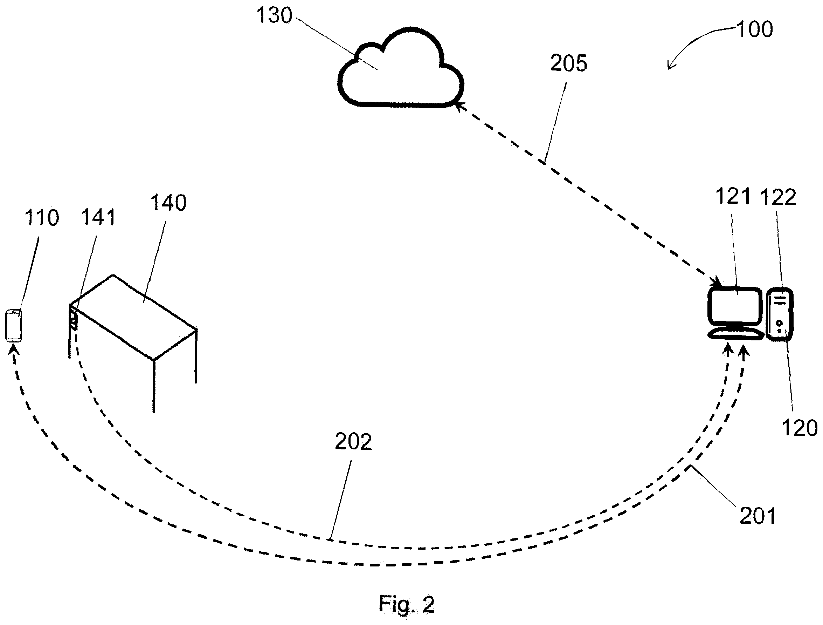

In Fig. 2 ist eine zweite Ausführungsform der erfindungsgemäßen Vorrichtung 100 dargestellt. In dieser Ausführungsform ist das lokale Modul 110 ein drahtloses Modul. Das drahtlose Modul 110 hat den Vorteil, dass es für den Gast leicht in eine für ihn bezüglich Informationsein- oder ausgabe angenehme Position bringbar ist. Das drahtlose lokale Modul 110 ermöglicht die Eingabe einer Information über eine Lokalisierung an einem diskreten Ort wie einem bestimmten Tisch als Einrichtungsgegenstand 140. Dabei weist der Einrichtungsgegenstand140 eine Bestätigungsvorrichtung 141 auf, womit die von dem mobilen lokalen Modul 110 an die Basisstation gesendete Information über die Lokalisierung bestätigbar ist. Die Information über die Lokalisierung kann beispielsweise eine Tischnummer sein, die an dem Möbelstück 140 angebracht ist. Die Bestätigungsvorrichtung ist in dem gezeigten Ausführungsbeispiel ein an dem Tisch angebrachter Taster, der ebenfalls mit der Basisstation über eine Datenverbindung 202 verbunden ist. Diese Verbindung kann drahtgebunden oder drahtlos ausgeführt sein. Durch die Bestätigung ist sichergestellt, dass der Gast die Lokalisierung des diskreten Ortes fehlerfrei durchgeführt hat. Der übrige Aufbau der Vorrichtung und Ablauf entspricht dem zur Fig. 1 beschriebenen.

Bei der Verwendung von mobilen lokalen Modulen 110 kann die Integration einer Diebstahlwarneinrichtung in die Vorrichtung 100 vorteilhaft sein. Dabei kann die Diebstahlwarneinrichtung dazu eingerichtet sein, die Entfernung des lokalen Moduls 110 aus einem zuvor festgelegten Raum anzuzeigen. Da das mobile lokale Modul 110 ständig über die drahtlose Verbindung 201 zur Basisstation 120 lokalisiert werden kann, kann unmittelbar festgestellt werden, wenn das mobile lokale Modul 110 einen zuvor festgelegten Bereich um die Basisstation 120 verlässt und Gegenmaßnahmen können unmittelbar eingeleitet werden.

Figur 3 zeigt eine physikalische Ausführungsform des lokalen Moduls 110. Das lokale Modul 110 verfügt auf der Oberfläche (Figur 3a, Draufsicht eines lokalen Moduls) einen Display 125, mindestens eine Glasplatte mit Touchfunktion (kurz Touch) 118 und RGB Anzeige LEDs 117. Das Display 125 ist auf der oberen Oberfläche des Gehäuses 126 des lokalen Moduls integriert um einem Benutzer die Möglichkeit zur Interaktion zu geben. Auf dem Display 125 kann dem Benutzer zum Beispiel seine Bestellung angezeigt werden, sodass er die Möglichkeit hat, diese zu bestätigen. Das Display 125 kann zum Beispiel bei Tischreservierungen eine Reservierungsnummer und/oder eine Uhrzeit der Reservierung anzeigen. Das Display 125 kann aus LED oder OLED sein. OLED Displays haben die Vorteile, dass sie geringe Energieaufnahme besitzen, einen flacheren Aufbau ermöglichen (sodass die Bauhöhe des lokalen Moduls auch geringer wird) gegenüber LEDs, eine hohe Kontrastauflösung sowie gute Abstrahlwinkel (Lambertian) haben. Die Glasplatte mit Touchfunktion 118 befindet sich auf der Oberseite des lokalen Moduls 110 um die Möglichkeit zu bieten einerseits das Modul 110 optisch aufzuwerten und andererseits das Modul 110 spritzwasserfest zu machen. Des Weiteren hat die Touchfunktion 118 die technische Aufgabe das Mikrofon 111 zur Tonaufnahme freizuschalten. In Kombination mit einem (O)LED Display 125 kann die Glasplatte mit Touchfunktion 118 zur weiteren Bedienung wie z.B. einer Bestätigung der Bestellung oder "Webwischen" einzelner Positionen innerhalb der Bestellung verwendet werden. Die RGB Anzeige LEDs 117 auf der Oberseite des Gehäuses 126 dienen zur Anzeige von Status, wie z.B. rot bei einer bereits vorhandenen Reservierung. Ein Leuchten der LEDs 117 beschränken sich nicht auf ein statisches Leuchten. Die LEDs 117 können um verschiedene Status anzuzeigen auch blinken oder als Lauflicht sowie andere Zustände ausgeführt sein.

Figur 3b zeigt die Seitenansicht eines möglichen lokalen Moduls 110. Das lokale Modul 110 in Figur 3b besteht aus mindestens einem Akku 115, einem Mikrofon 111, einem Diffusor 116, einem Lautsprecher 122, einem Einplatinencomputer 119, einem dB-Sensor 124, einem Helligkeitssensor 123 und den Komponenten 117, 118 und 125 aus Figur 3a an der Oberseite des lokalen Moduls 110. Der verwendete Akkumulator 115 kann standardisierte Lithium Akkus mit hoher Kapazität sein um hohe Flexibilität und Austauschbarkeit zu gewährleisten. Ein oder mehrere Akkus 115 werden bevorzugt in den Füßen 127 des lokalen Moduls untergebracht um die Bauhöhe und Gewichtsverteilung des lokalen Moduls 110 zu optimieren. Bei mindestens zwei Akkus 115 werden diese durch eine geeignete Schaltung getrennt voneinander entladen. Im Fall eines entladenen Akkus 115 kann dem Betreiber signalisiert werden, damit dieser mit einer Vorlaufzeit den entladenen Akku durch einen vollen Akku 115 tauschen kann. Bevorzugt besitzen die Akkumulatoren 115 eigene Klappen im Gehäuse, die derart angeordnet sind, dass ein ungewolltes Öffnen (durch z.B. den Kunden) zu verhindert werden kann. Mindestens ein, bevorzugt mehrere Mikrofone sind gleichmäßig verteilt am oberen Rand des Gehäuses installiert. Dies erlaubt eine richtungsunabhängige Audioaufzeichnung bzw. eine optimierte Geräuschunterdrückung. Die Mikrofone 111 sind bevorzugt MEMS-Mikrofone. Darüber hinaus gewährleistet eine aktive Bedienung des Benutzers, wie ein Finger auf die Touchfunktion 118 für die Aktivierung des Mikrofons 111, eine technisch sichere Bedienung, wo eine Softwaremanipulation nicht möglich ist. Der Diffusor 116 wird über die RGB Anzeige LEDs 117 angebracht um ein optisch abgerundetes zu generieren. Bevorzugt ist der Diffusor 116 aus einem weißen Material. Bevorzugt ist der Diffusor 116 rechts und links vom Display 115 angebracht. Mindestens ein Lautsprecher 122 ist an dem lokalen Modul 11 O angebracht. Bevorzugt ist diese auf der unteren Seite des Moduls 11 O angebracht. Durch diese Anbringung kann das Gerät spritzwassergeschützt sein. Außerdem hat es den technischen Vorteil, dass eine Resonanzfläche, die durch den Tisch (oder jedes andere Möbelstück) verursacht wird, Sounds aus dem Lautsprecher 122 gut für den Benutzer hörbar ist. Der Einplatinencomputer 119 ist eine lokale Recheneinheit, an der alle einzelnen Komponenten angeschlossen sind. Bevorzugt ist der Einplatinencomputer 119 ein leistungsstarker Mini-Computer mit WLAN Modul. Zu den Aufgaben des Einplatinencomputers 119 gehört unter anderen eine Kommunikation mit anderen Modulen 110, Basisstation 120 oder auch der Ortung eines Moduls. Der dB-Sensor 124 ist bevorzugt ein MEMS Mikrofron, der mit einer geeigneten Auswertehardware verbunden ist. Durch die Auswertung kann eine Umgebungslautstärke proportional in eine Spannung umgewandelt werden. Dies hat den Vorteil, dass eine softwaretechnisch manipulierte Tonaufzeichnung verhindert werden kann. Der dB-Sensor 124 erlaubt des Weiteren den technischen Detail, dass eine Lautstärkenanpassung der Lautsprecher an den Benutzer, bzw. der Benutzerumgebung ermöglicht wird. Mindestens ein Helligkeitssensor 123 wird im oberen Teil des Gehäuses 126 um die aktuelle Helligkeit im Raum zu erfassen. Bei mehreren Helligkeitssensoren 123 werden diese bevorzugt so verteilt, dass der Einfluss einer Störquelle, wie z.B. eine direkt auf das Modul 110 leuchtende Tischlampe, verringert wird. Ein Mittelwert aller Sensoren 123 wird als Referenz verwendet. Durch eine Anpassung (z.B. an die Referenz) kann eine geeignete Helligkeit der RGB Anzeige LEDs 117 und des Displays 125 eingestellt werden, sodass der Benutzer eine angemessene Helligkeit erfährt (z.B. im Dunkeln nicht geblendet, in hellen Räume gute Lesbarkeit). Die Form und Größe des Gehäuses 126 des Moduls 11 O ist bevorzugt so gewählt, dass möglichst wenig Platz von einem Möbelstück (z.B. Tisch) in Anspruch genommen wird, um zum Beispiel bei der Gastronomie die Anzahl der möglichen Speisen auf einem Tisch nicht zu reduzieren. Weiterhin ist es bevorzugt, dass das lokale Modul nur von der Basisstation abgeschaltet werden kann um Manipulationsversuche durch den Benutzer zu verhindern.

Figur 4 beschreibt ein Verfahren 200 zum Betreiben einer erfindungsgemäßen gastronomischen Vorrichtung 100, wobei die gastronomische Vorrichtung 100 mindestens einen Einrichtungsgegenstand mit einem darin ortsfest integrierten lokalen Modul 110 und mindestens einer zentralen Datenverarbeitungsanlage 130 umfasst, wobei das lokale Modul mindestens ein Mikrofon 111 und eine Sprachaufnahmestartvorrichtung 112 aufweist, umfassend:
- Generieren 210 einer Audiodatei als elektronische Daten aus einer Sprachaufnahme durch das Mikrofon 111 des lokalen Moduls;
- Übertragen 220 von elektronischen Daten vom lokalen Modul 110 zur zentralen Datenverarbeitungsanlage 130;
- Analysieren 230 der übertragenen elektronischen Daten auf enthaltende Sprache durch eine Spracherkennungseinrichtung und ein Überführen einer darin enthaltende Information in einem Text;
- Senden 240 des Textes an eine Basisstation 120 der gastronomischen Vorrichtung 100; und
- Transportieren 250 eines in der Information angeforderten Gegenstandes zur Einrichtungsgegenstand mit dem ortsfesten lokalen Modul 110.

Die hier gezeigten Ausführungsformen stellen nur Beispiele für die vorliegende Erfindung dar und dürfen daher nicht einschränkend verstanden werden. Alternative durch den Fachmann in Erwägung gezogene Ausführungsformen sind gleichermaßen vom Schutzbereich der vorliegenden Erfindung umfasst.

### Bezugszeichenliste:

100 gastronomische Vorrichtung
110 lokales Modul
111 Mikrofon
112 Sprachaufnahmestartvorrichtung
113 Visualisierungsvorrichtung
114 Ausgabeeinrichtung
115 Akkumulator (Akku)
116 Diffusor
117 RGB Anzeige LED
118 Glasplatte mit Touchfunktion
119 Einplatinencomputer
120 Basisstation
121 Anzeigemodul
122 Lautsprecher
123 Helligkeitssensor
124 dB-Sensor
125 Display (LED oder OLED)
126 Gehäuse
127 Füße eines lokalen Moduls
130 zentrale Datenverarbeitungsanlage
140 Einrichtungsgegenstand
141 Bestätigungsvorrichtung
150 Raum
200 Verfahren zum Betreiben der erfindungsgemäßen Vorrichtung
201 drahtlose Datenverbindung zwischen lokalem Modul und Basisstation
202 Datenverbindung zwischen Bestätigungsvorrichtung und Basisstation
205 Datenverbindung zwischen Basisstation und zentraler Datenverarbeitungsanlage
210 Generieren einer Audiodatei als elektronische Daten aus einer Sprachaufnahme
220 Übertragen von elektronischen Daten vom lokalen Modul zur zentralen Datenverarbeitungsanlage;
230 Analysieren der übertragenen elektronischen Daten auf enthaltende Sprache durch eine Spracherkennungseinrichtung und ein Überführen einer darin enthaltende Information in einem Text
240 Senden des Textes an eine Basisstation der gastronomischen Vorrichtung
250 Transportieren eines in der Information angeforderten Gegenstandes zur Einrichtungsgegenstand mit dem ortsfesten lokalen Modul

## Patentansprüche

1. Eine gastronomische Vorrichtung (100) umfassend mindestens einen Einrichtungsgegenstand (140) mit einem darin ortsfest integrierten lokalen Modul (110) und mindestens eine zentrale Datenverarbeitungsanlage (130), wobei das lokale Modul (110) dazu ausgestaltet ist, elektronischen Daten zur zentralen Datenverarbeitungsanlage (130) zu übertragen, wobei das lokale Modul mindestens ein Mikrofon (111) und eine Sprachaufnahmestartvorrichtung (112) aufweist, die dazu geeignet sind, eine Audiodatei als die elektronischen Daten aus der Sprachaufnahme zu generieren, wobei in der zentralen Datenverarbeitungsanlage (130) eine Spracherkennungseinrichtung so ausgestaltet ist, dass sie die übertragenen elektronischen Daten auf enthaltende Sprache analysiert und eine darin enthaltende Information in einen Text überführt und an eine Basisstation (120) der gastronomischen Vorrichtung (100) sendet, damit eine in der Information enthaltenden Anforderung nach einem Gegenstand dort geeignet ausgegeben wird, um den Gegenstand zum Einrichtungsgegenstand mit dem ortsfesten lokalen Modul (110) transportieren zu können.

2. Die gastronomische Vorrichtung (100) gemäß Anspruch 1,
**dadurch gekennzeichnet,**
**dass** das lokale Modul (110) dazu eingerichtet ist, über ein Netzwerk eine drahtlose Datenverbindung mit der Basisstation (120) und/oder der zentralen Datenverarbeitungsanlage (130) aufzubauen, während die Basisstation (120) dazu eingerichtet ist, eine Datenverbindung zumindest mit der zentralen Datenverarbeitungsanlage (130) aufzubauen.

3. Die gastronomische Vorrichtung (100) gemäß Anspruch 1 oder 2,
**dadurch gekennzeichnet,**
**dass** die zentrale Datenverarbeitungsanlage (130) eine Cloud ist, die dazu geeignet ist Bestellinformationen für statische Zwecke zu analysieren und weiterzuverarbeiten.

4. Die gastronomische Vorrichtung (100) gemäß Anspruch 1 oder 2,
**dadurch gekennzeichnet,**
**dass** in der gastronomischen Vorrichtung (100) eine Diebstahlwarneinrichtung integriert ist, die dazu eingerichtet ist, eine Entfernung des lokalen Moduls (110) aus einem zuvor festgelegten Raum (150) anzuzeigen.

5. Die gastronomische Vorrichtung (100) gemäß einem der vorhergehenden Ansprüche, **dadurch gekennzeichnet,**
**dass** die Basisstation (120) ein Smartphone, ein Notebook oder ein Tablet ist.

6. Die gastronomische Vorrichtung (100) gemäß einem der vorhergehenden Ansprüche,
**dadurch gekennzeichnet,**
**dass** die zentrale Datenverarbeitungsanlage (130) gleich der Basisstation (120) ist

7. Die gastronomische Vorrichtung (100) gemäß einem der vorhergehenden Ansprüche,
**dadurch gekennzeichnet,**
**dass** das lokale Modul (110) ein robustes und zumindest spritzwassergeschütztes Gehäuse aufweist.

8. Die gastronomische Vorrichtung (100) gemäß einem der vorhergehenden Ansprüche, **dadurch gekennzeichnet,**
**dass** das lokale Modul (110) zusätzlich zum Mikrofon einen eingebauten Audiosensor aufweist, der kontinuierlich oder diskontinuierlich eine Umgebungslautstärke messen kann, damit das lokale Modul durch eine Analyse der Umgebungslautstärke eine zweidimensionale Geräuschmap erstellen kann, die als Grundlage einer automatischen Lautstärkenregelung der Lautsprecher in dem lokalen Modul dient.

9. Die gastronomische Vorrichtung (100) gemäß einem der vorhergehenden Ansprüche, **dadurch gekennzeichnet,**
**dass** das lokale Modul (110) die Eingabe einer Information über eine Lokalisierung an einem diskreten Ort ermöglicht, wobei die Information über die Lokalisierung über eine an dem diskreten Ort eingerichtete Bestätigungsvorrichtung (141) bestätigbar ist.

10. Die gastronomische Vorrichtung (100) gemäß einem der Ansprüche 1 - 8, **dadurch gekennzeichnet,**
**dass** das lokale Modul (110) dazu eingerichtet ist, seine Lokalisierungsinformation automatisch zu erzeugen und an die Basisstation (120) zu übermitteln.

11. Die gastronomische Vorrichtung (100) gemäß einem der vorherigen Ansprüche, **dadurch gekennzeichnet,**
**dass** die Basisstation (120) ein Anzeigemodul (121) und einen Lautsprecher (122) aufweist und zur Steuerung der Vorrichtung (100) eingerichtet ist.

12. Die gastronomische Vorrichtung (100) gemäß einem der vorherigen Ansprüche, **dadurch gekennzeichnet,**
**dass** die Basisstation (120) eine Spracherkennungseinrichtung aufweist, wobei die Spracherkennungseinrichtung dazu eingerichtet ist, eine Sprachdatei zu empfangen, die in der Sprachdatei enthaltende Sprache zu analysieren, Fremdsprachen zu erkennen und in eine Zielsprache zu übersetzen und die in der Sprachdatei enthaltene Information in Text zu überführen und in der Basisstation (120) anzuzeigen, sofern die über Sprache eingegebene Information in Text überführbar ist und anderenfalls die Sprachdatei auf der Basisstation (120) abzuspielen.

13. Die gastronomische Vorrichtung (100) gemäß einem der Ansprüche 2 bis 11, **dadurch gekennzeichnet,**
**dass** die zentrale Datenverarbeitungsanlage (130) eine Spracherkennungseinrichtung aufweist, wobei die Spracherkennungseinrichtung dazu eingerichtet ist, eine Sprachdatei von der Basisstation (120) zu empfangen, die in der Sprachdatei enthaltende Sprache zu analysieren, Fremdsprachen zu erkennen und in eine Zielsprache zu übersetzen und die in der Sprachdatei enthaltene Information in Text zu überführen und an die Basisstation (120) zu senden, sofern die über Sprache eingegebene Information in Text überführbar ist und anderenfalls die Sprachdatei an die Basisstation (120) zu senden.

14. Die gastronomische Vorrichtung (100) gemäß einem der vorherigen Ansprüche, **dadurch gekennzeichnet,**
**dass** auf der Basisstation (120) ein Reservierungssystem installiert ist, wobei in dem Reservierungssystem die Reservierung einer Servicedienstleistung speicherbar ist und wobei ein Reservierungswunsch über ein Netzwerk an das Reservierungssystem übermittelbar ist, wobei in dem Reservierungssystem der Reservierungswunsch hinsichtlich seiner Ausführbarkeit überprüfbar ist und von dem Reservierungssystem bei Ausführbarkeit des Reservierungswunsches eine Reservierungsbestätigung oder bei Nichtausführbarkeit des Reservierungswunsches eine Reservierungsablehnung erzeugbar und über das Netzwerk an den Reservierungsabsender versendbar ist, wobei die Information für eine Reservierung für eine Servicedienstleistung von der Basisstation (120) an das lokale Modul (110) sendbar ist.

15. Ein Verfahren (200) zum Betreiben einer gastronomischen Vorrichtung (100) nach Anspruch 1, wobei die gastronomische Vorrichtung (100) mindestens einen Einrichtungsgegenstand (140) mit einem darin ortsfest integrierten lokalen Modul (110) und mindestens einer zentralen Datenverarbeitungsanlage (130) umfasst, wobei das lokale Modul mindestens ein Mikrofon (111) und eine Sprachaufnahmestartvorrichtung (112) aufweist, umfassend:
- Generieren (210) einer Audiodatei als elektronische Daten aus einer Sprachaufnahme durch das Mikrofon (111) des lokalen Moduls;
- Übertragen (220) von elektronischen Daten vom lokalen Modul (110) zur zentralen Datenverarbeitungsanlage (130);
- Analysieren (230) der übertragenen elektronischen Daten auf enthaltende Sprache durch eine Spracherkennungseinrichtung und ein Überführen einer darin enthaltende Information in einem Text;
- Senden (240) des Textes an eine Basisstation (120) der gastronomischen Vorrichtung (100); und
- Transportieren (250) eines in der Information angeforderten Gegenstandes zur Einrichtungsgegenstand mit dem ortsfesten lokalen Modul (110).
